# EUROPÄISCHE PATENTSCHRIFT

(11) **EP 1 175 272 B1**
(45) Veröffentlichungstag und Bekanntmachung des Hinweises auf die Patenterteilung: **23.07.2003**
(21) Anmeldenummer: 00927136.2
(22) Anmeldetag: 04.05.2000
(51) Int. Cl.: B23B 29/04, B23B 31/02

(54) **SPANNSYSTEM FÜR HOHE DREHZAHLEN**
CLAMPING SYSTEM FOR HIGH ROTATIONAL SPEEDS
SYSTEME DE SERRAGE POUR VITESSES DE ROTATION ELEVEES

(30) Priorität: 05.05.1999 DE 19920748
(43) Veröffentlichungstag der Anmeldung: 30.01.2002
(73) Patentinhaber: Gühring, Jörg, Dr., 72458 Albstadt (DE)
(72) Erfinder: KLEINER, Gilbert, D-72514 Inzigkofen-Vilsingen (DE)
(74) Vertreter: Winter, Brandl, Fürniss, Hübner, Röss, Kaiser, Polte Partnerschaft
(86) Internationale Anmeldenummer: EP0004000
(87) Internationale Veröffentlichungsnummer: WO00067938

(56) Entgegenhaltungen:
- WO-A-94/05451
- DE-A- 19 753 663
- FR-A- 2 754 201
- US-A- 5 466 102

## Beschreibung

Die vorliegende Erfindung bezieht sich auf ein für hohe Drehzahlen ausgelegtes Spannsystem zur lösbaren Verbindung zweier Teile, wie es beispielsweise für die Kupplung eines Werkstück- oder Werkzeugträgers, beispielsweise in Form einer Werkzeug-Grundaufnahme, und einer Handhabungseinrichtung, wie z. B. einer Spindel einer Werkzeugmaschine, oder für Werkzeugsystemmodule untereinander Verwendung findet.

Bei derartigen Spannsystemen, die auch als Schnittsteile oder Trennstelle bezeichnet werden, kommt es darauf an, die zu verbindenden Teile zuverlässig und fest aneinander zu klammern, wobei über einen Passungsflächeneingriff zwischen einem Hohlschaft des einen Teils und einem Aufnahmeabschnitt des anderen Teils eine exakte Lagefixierung der zu verbindenden Teile zueinander sichergestellt wird. Das Spannen bzw. Aneinanderklammern der beiden zu verbindenden Teile erfolgt, indem der Hohlschaft beim Anlegen von Spannkörpern einer Spanneinrichtung gegen eine im Hohlschaft ausgebildete hinterschnittene Spannschulter in den Aufnahmeabschnitt gezogen wird. Dabei wird zwischen Planflächen der zu verbindenden Teile eine Anpreßkraft erzeugt, so daß die beiden aneinandergeklammerten Teile durch die feste Verbindung zwischen den Passungsflächen eine exakte axiale wie auch radiale Lagefixierzung erhalten.

In jüngerer Zeit hat sich zunehmend das sogenannte Hohlschaft-Spannsystem durchgesetzt, bei dem der Hohlschaft entweder zylindrisch oder konisch ausgeführt ist. Im zusammengefügten Zustand der beiden zu verbindenden Teile können die zur Anklammerung der Teile aneinander dienenden Spannkörper nicht nur dafür sorgen, daß eine ausreichende axiale Anpreßkraft erzeugt wird, sondern auch dafür, daß der Hohlschaft eine gewisse radiale Aufweitung erfährt, wodurch die Passungsgenauigkeit zwischen Hohlschaft und Aufnahmeabschnitt zusätzlich verbessert wird.

So wird beispielsweise in der deutschen Patentanmeldung Nr. 19753663.8 (nach dem Prioritätsdatum der Vorliegenden Anmeldung veröffentlicht) ein Spannsystem für zwei zu verbindende Teile, beispielsweise ein Werkzeugsystemmodul und eine Werkzeugmaschinenspindel, vorgeschlagen, von denen ein Teil einen vorzugsweise zylindrischen oder konischen Hohlschaft und das andere Teil einen entsprechenden Aufnahmeabschnitt zur passungsgenauen Aufnahme des Hohlschafts aufweist. Das Spannsystem umfaßt eine konzentrisch im Aufnahmeabschnitt des anderen Teils angeordnete Spanneinrichtung, die sich im aneinandergefügten Zustand beider Teile in den Hohlschaft des einen Teils erstreckt und zumindest zwei gegensinnig bewegbare Spannkörper sowie eine die Spannkörper antreibende Betätigungseinrichtung aufweist, durch welche die Spannkörper synchron in und außer Eingriff mit einer hinterschnittenen Spannschulter des Hohlschafts bewegbar sind, wodurch zwischen Planflächen der beiden zu verbindenden Teile eine Anpreßkraft erzeugt wird. Die Spannkörper sind als Kopfabschnitte von im wesentlichen parallel zur Längs- bzw. Drehachse des Aufnahmeabschnitts angeordneten, länglichen Spannelementen ausgeführt, die sich über Halteabschnitte an einer hinterschnittenen Ausnehmung des Aufnahmeabschnitts axial abstützen. Die Spannelemente stehen an ihren Fußabschnitten miteinander in Verbindung, wobei in der bevorzugten Ausführungsform diese Verbindung dadurch realisiert wird, daß die Spannelemente von den Schenkeln einer einstückig ausgebildeten, Ü-förmigen Spanngabel gebildet sind.

Dieses herkömmliche Spannsystem zeichnet sich dadurch aus, daß es einerseits mit einem Minimum an Bauteilen auskommt und andererseits eine einfache, zuverlässige und formstabile Kupplung der beiden zu verbindenden Teile ermöglicht, ohne daß zusätzliche Montage- oder Befestigungsvorrichtungen erforderlich sind.

Jedoch benötigt die Bauweise dieses Spannsystems einerseits aufgrund der Tatsache, daß die Spannelemente eine gewisse Elastizität besitzen müssen, eine etwas größere axiale Baulänge der Spannelemente und damit der Spanneinrichtung insgesamt. Da dieses Spannsystem allenfalls über eine enge Spielpassung im Aufnahmeabschnitt festgehalten werden kann, wird es andererseits schwierig, die hohen Anforderungen im Hinblick auf Wuchtgüte des Gesamtsystems bestehend aus Werkzeugmaschinenspindel, Spanneinrichtung und Werkzeugaufnahme mit Werkzeug, insbesondere bei hohen Drehzahlen zu erfüllen.

Die französische Patentanmeldung FR 2 754 201 A1 offenbart ein Spannsystem, das auf dem Prinzip der Aneinanderklammerung zweier zu verbindender Teile durch eine Spanneinrichtung mit Spannkörpern beruht. Bei diesem Spannsystem sind die Spannkörper radial gleitbeweglich in einem im Aufnahmeabschnitt des einen Teils verankerten Trägerkörper geführt und werden von einer ebenfalls im Trägerkörper aufgenommenen Betätigungseinrichtung synchron in bzw. außer Eingriff mit einer hinterschnittenen Spannschulter im Hohlschaft des anderen Teils gegensinnig bewegt.

Ein Spannsystem gemäß dem Oberbegriff des Patentanspruchs 1 ist aus dem US Patent Nr. 5,466,102 bekannt. Bei diesem Spannsystem werden zwei lose angeordnete oder zumindest nicht eindeutig fixierte klammerartige Spannelemente formschlüssig in bzw. außer Eingriff mit hinterschnittenen Spannschultern im Aufnahmeabschnitt des einen Teils und im Hohlschaft des anderen Teils durch eine die Spannelemente antreibende Betätigungseinrichtung gebracht.

Aufgabe der vorliegenden Erfindung ist es, eine im Hinblick auf Wuchtgüte des Gesamtsystems bei hohen Drehzahlen optimiertes Spannsystem zu schaffen, das mit einem Minimum an bewegten Teilen eine einfache, zuverlässige und formstabile Kupplung der beiden zu verbindenden Teile ermöglicht.

Diese Aufgabe wird durch das Spannsystem gemäß den Merkmalen des Patentanspruchs 1 gelöst.

Erfindungsgemäß weist das Spannsystem einen im Aufnahmeabschnitt beispielsweise einer Werkzeugmaschinenspindel durch beispielsweise eine Preßpassung sowohl radial als auch axial fest verankerbaren Trägerkörper auf, auf dem die Spannelemente radial gleitbeweglich geführt sind. Diese konstruktive Lösung hat gegenüber dem herkömmlichen Spannsystem zahlreiche Vorteile. Durch die feste Verankerung des Trägerkörpers im Aufnahmeabschnitt reduziert sich die Zahl der im Rotationsbetrieb beweglichen Teile auf die beiden Spannelemente. Da die Spannelemente nicht in der Weise elastisch verformbar sein müssen, wie dies im herkömmlichen Spannsystem erforderlich war und was über eine relativ große axiale Länge der Spannelemente realiert wurde, kann im erfindungsgemäßen Spannsystem die axiale Baulänge der Spannelemente wesentlich verkürzt werden, was wiederum in einem niedrigeren Gewicht der Spannelemente sowie des Gesamtgewicht des Spannsystems resultiert. Die radial gleitbewegliche Anordnung der Spannelemente am Trägerkörper erlaubt zudem eine rotationssymmetrische Ausgestaltung der Spannelemente, die im Rotationsbetrieb die beweglichen Teile darstellen. Diese Merkmale tragen zu einer gegenüber dem herkömmlichen Spannsystem wesentlichen Verbesserung hinsichtlich Lage-Wiederholgenauigkeit beim Spannen bzw. Lösen der Spanneinrichtung der Spannelemente bei, wodurch Unwuchtstreuungen aufgrund toleranzbedingter Positionsstreuungen bewegter Teile bei hohen Drehzahlen beträchtlich reduziert werden. Da die Reproduzierbarkeit des Auswuchtzustands des Gesamtsystem im wesentlichen von der Lage-Wiederholgenauigkeit der beweglichen Teile des Spannsystems sowie deren Masse und Rotationssymmetrie abhängt, wird das erfindungsgemäße Spannsystem den hohen Anforderungen bezüglich der Wuchtgüte an das Gesamtsystem bestehend aus den beiden zu verbindenden Teile, wie z.B. Werkzeugmaschinenspindel und Werkzeugaufnahme mit Werkzeug, sowie dem Spannsystem, bei hohen Drehzahlen gerecht.

Die das Anklammern der zu verbindenden Teile bewirkenden Spannelemente sind erfindungsgemäß als verhältnismäßig robuste Klammern ausgebildet, die die Fügestelle zwischen den zu kuppelnden Teilen direkt überbrücken und so den Kraftfluß auf kleinstem Raum konzentrieren. Der Wirkungsgrad der Spanneinrichtung wird dadurch sehr groß, zumal die Spanneinrichtung aufgrund ihrer vorzugsweise tonnen- bzw. schalenförmigen Gestalt besonders formstabil wird. Zusätzlich wird im Rotationsbetrieb des Spannsystems eine fliehkraftbedingten Spannkraftverstärkung der symmetrischen Spannelemente erreicht. Ein weiterer Vorteil ist in einer möglichen Steigerung der Oberflächenhärte und damit der Veschleißfestigkeit der Spannelemente gegenüber der begrenzten Oberflächenhärte der auf Biegung beanspruchten Spannelemente des vorstehend beschriebenen herkömmlichen Spannsystems zu sehen.

Das erfindungsgemäße Spannsystem zeichnet sich ferner durch einen einfachen und kompakten Aufbau aus, der mit einem Minimum an beweglichen Bauteilen eine zuverlässige und formstabile Anklammerung der zu verbindenden Teile ermöglicht. Da bei dem erfindungsgemäßen Spannsystem des weiteren ein Minimum an bewegten Teilen vorliegt, entsteht bei deren Bewegung nur wenig Reibung. Auf diese Weise wird zwischen den beiden zu verbindenden Teilen eine noch höhere Spannkraft erreicht.

Weitere vorteilhafte Merkmale der vorliegenden Erfindung sind Gegenstand der Unteransprüche und/oder ergeben aus der nachfolgenden Beschreibung, in der an bevorzugten Ausführungsbeispielen das erfindungsgemäße Spannsystem näher erläutert wird.

In den Zeichnungen zeigt:
Fig. 1 einen Längsschnitt des erfindungsgemäßen Spannsystems gemäß einem ersten Ausführungsbeispiel in der Lösestellung;
Fig. 2 einen Querschnitt durch das Spannsystem aus Fig. 1 entlang der Linie II-II;
Fig. 3 eine Draufsicht auf einen Trägerkörper des Spannsystems aus Fig. 1;
Fig. 4 einen Querschnitt durch den Trägerkörper aus Fig. 3 entlang der Linie IV-IV;
Fig. 5 einen Querschnitt durch das Spannsystem aus Fig. 1 entlang der Linie V-V;
Fig. 6 einen Längsschnitt des erfindungsgemäßen Spannsystems gemäß dem ersten Ausführungsbeispiel in der Spannstellung;
Fig. 7 einen Querschnitt durch das Spannsystem aus Fig. 6 entlang der Linie VII-VII
Fig. 8 einen Längsschnitt des erfindungsgemäßen Spannsystems gemäß einem zweiten Ausführungsbeispiel in der Lösestellung; und
Fig. 9 eine Draufsicht auf einen Trägerkörper des Spannsystems aus Fig. 8.

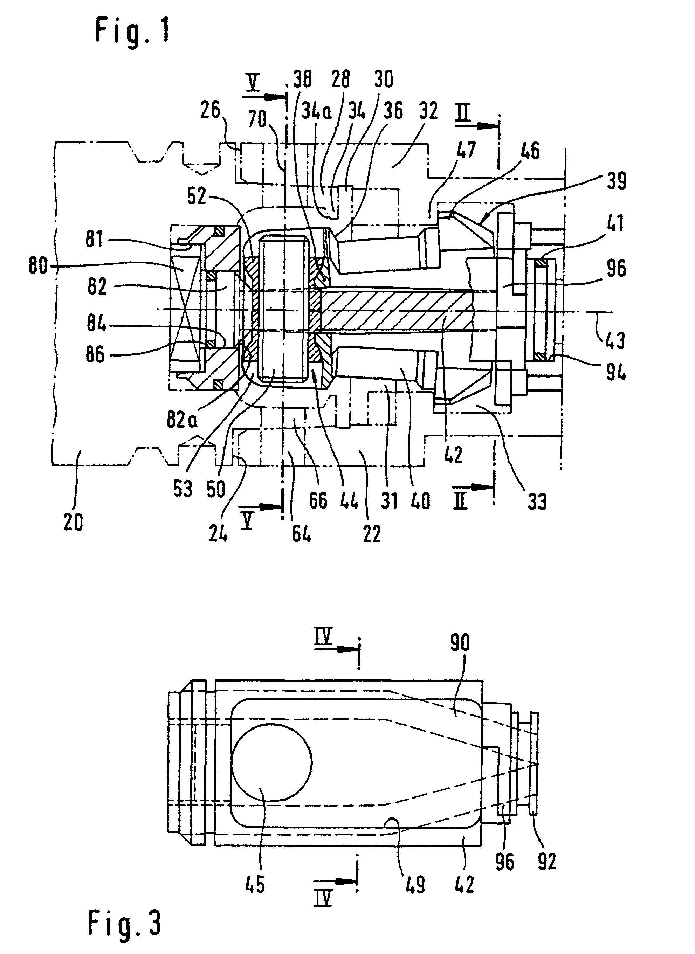

In Fig. 1 ist mit dem Bezugszeichen 20 ein im folgenden als Werkzeug bezeichnetes Teil, beispielsweise ein Werkzeugsystemmodul in Form einer Werkzeug-Grundaufnahme, und mit dem Bezugszeichen 22 ein im folgenden als Werkzeugaufnahme bezeichnetes Teil, beispielsweise eine Spindel einer Werkzeugmaschine, angedeutet. Es sei jedoch bereits an dieser Stelle darauf hingewiesen, daß das nachfolgend näher zu beschreibende Spannsystem die Schnittstelle zweier zweier zu verbindender Teile betrifft und daher für alle Anwendungsgebiete in Frage kommt, in denen es darum geht, zwei Teile zentriert und lösbar miteinander zu verbinden.

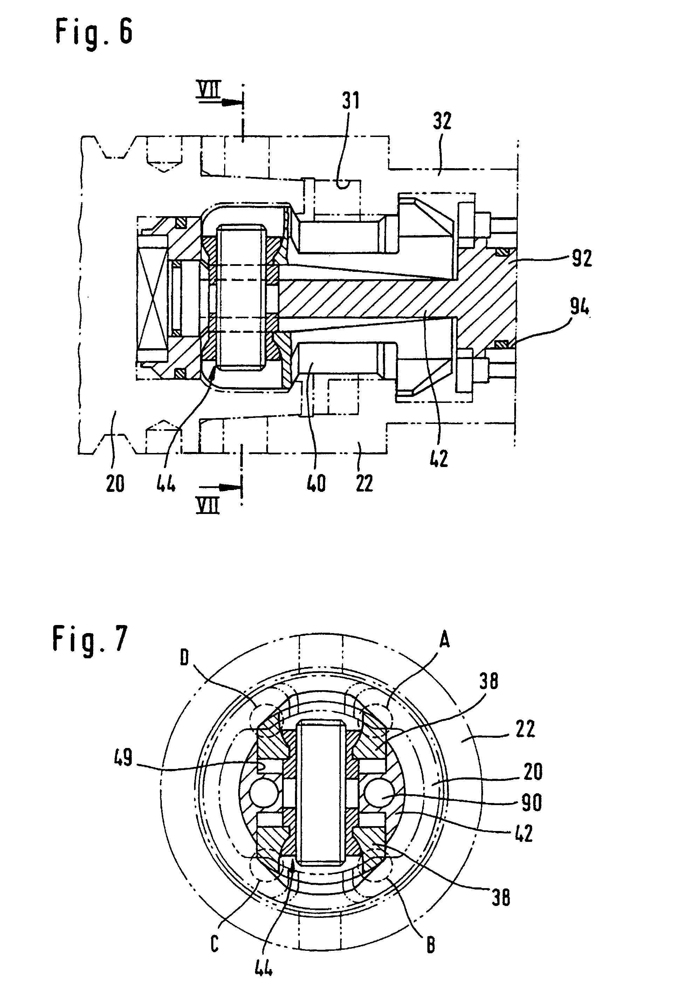

In Fig. 1 sind das Werkzeug 20 und die Werkzeugaufnahme 22 im gelösten Zustand gezeigt, in dem eine Radialringfläche 24 des Werkzeugs 20 von einer Radialringfläche 26 der Werkzeugaufnahme 22 beabstandet ist, wobei jedoch ein mit 28 bezeichneter Hohlschaft des Werkzeugs 20 zentriert in einer entsprechenden Ausnehmung 30 eines Aufnahmeabschnitts 32 der Werkzeugaufnahme 22 eingeführt ist. Zwischen den beiden Radialringflächen 24, 26 ist ein Planspalt ausgebildet. Fig. 6 zeigt das Werkzeug 20 und die Werkzeugaufnahme 22 im aneinandergeklammerten Zustand. In diesem Zustand sitzt der Hohlschaft 28 des Werkzeugs 20 fest in der Ausnehmung 30 der Werkzeugaufnahme 22.

In dem in Fig. 1 und Fig. 6 gezeigten Ausführungsbeispiel sind die Passungsflächen zwischen dem Hohlschaft 28 und der Ausnehmung 30 von Konusflächen gebildet. Es ist jedoch gleichermaßen möglich, die Zentrierung des Hohlschafts 28 in der Ausnehmung 30 über Zylinderflächen vorzunehmen.

Obwohl im aneinandergeklammerten Zustand des Werkzeugs 20 und der Werkzeugaufnahme 22 die innige Verbindung zwischen den konischen Passungsflächen bereits eine Verdrehsicherung des Werkzeugs 20 und der Werkzeugaufnahme 22 bewirkt, kann eine zusätzliche Verdrehsicherung zwischen dem Werkzeug 20 und der Werkzeugaufnahme 22 beispielsweise auch durch wenigstens einen Mitnehmerstein realisiert werden, der in eine entsprechende Stirnausnehmung entweder des Hohlschafts oder des Aufnahmeabschnitts eingreift.

Bei dem in Fig. 1 und Fig. 6 gezeigten ersten Ausführungsbeispiel sind die zu verbindenden Teile 20, 22 ebenso wie der Hohlschaft 28 und die in diesen Teilen ausgebildeten Ausnehmungen, beispielsweise die Ausnehmung 30, rotationssymmetrisch gestaltet. Es ist jedoch hervorzuheben, daß die Erfindung nicht nur auf eine solche Gestaltung festgelegt ist.

Das erfindungsgemäße Spannsystem muß in der Lage sein, die zu verbindenden Teile 20, 22 in vorgegebener radialer wie auch axialer Positionierung fest aneinander zu klammern. Als ein weiteres erfindungswesentliches Merkmal ist neben einer minimalen Anzahl von beweglichen Bauteilen und einer einfachen Montierbarkeit eine leichte Lösbarkeit der verbundenen Teile unter Verwirklichung kleiner Aushubwege zu beachten. Zu diesem Zweck besitzt das erfindungsgemäße Spannsystem folgenden Aufbau:

Der Hohlschaft 28 ist radial innenliegend mit einer hinterschnittenen Spannschulter 34 ausgestattet. Die Spannschulter 34 wird von einer der Werkzeugaufnahme 22 zugewandten Keilfläche einer ringförmigen Ausnehmung des Hohlschafts 28 gebildet. Gegen die Spannschulter 34 können sich beim Betätigen des Spannsystems die Keilflächen 36 zweier Spannkörper 38 legen, um vorzugsweise mit Kraftübersetzung eine feste Anklammerung des Werkzeugs 20 an die Werkzeugaufnahme 22 zu bewirken.

Das erfindungsgemäße Spannsystem weist eine Spanneinrichtung 39, die wiederum zwei, in Bezug auf die Drehachse 43 symmetrisch angeordnete Spannelemente 40, einen zwischen den beiden Spannelementen 40 angeordneten Trägerkörper 42 und eine die Spannelemente 40 antreibende Betätigungseinrichtung 44 umfaßt, sowie einen Abdrückkörper 80 auf.

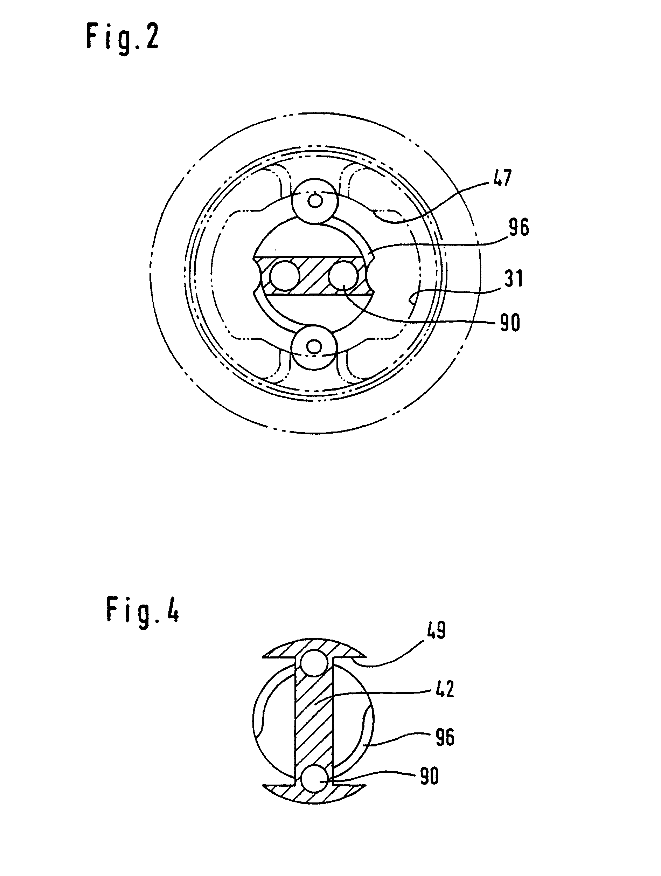

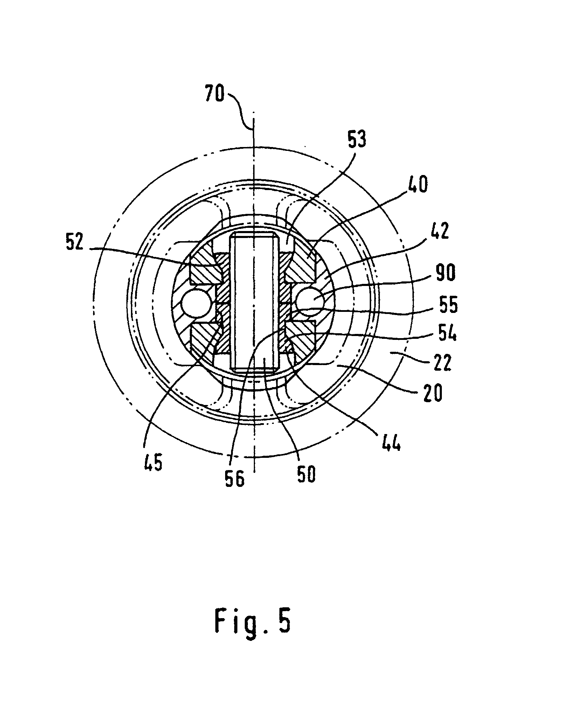

Der Trägerkörper 42 ist in einer axialen Ausnehmung 31 des Aufnahmeabschnitts 32 der Werkzeugaufnahme 22 angeordnet. Der Trägerkörper 42 weist an seiner gemäß Fig. 1 rechten Seite einen massiv ausgebildeten Zapfen 92 auf, der in einer axialen Ausnehmung 94 als Verlängerung der Ausnehmung 31 über eine enge Spielpassung aufgenommen ist, wobei mittels eines Dichtrings 41 eine Abdichtung zwischen diesen beiden Teilen bewirkt wird. Der Trägerkörper 42 hat eine Gestalt, wie sie sich im besonderen aus den Figuren 2 bis 6 ergibt und ist in der Art und Weise einer Bajonettverschlusses in der Werkzeugaufnahme 22 sowohl axial als auch radial fest verankert, wie es aus den Figuren 2 und 6 ersichtlich ist. Auf seiner dem Werkzeug 20 zugewandten Seite weist der Trägerkörper 42 einen radialen Durchbruch 45 auf, in dem die die Spannkörper 38 antreibende Betätigungseinrichtung 44 aufgenommen ist, wie es insbesondere aus Fig. 3 und 5 hervorgeht.

Die Spannelemente 40 sind jeweils auf verschiedenen Seiten des Trägerkörpers 42 in einer diesbezüglich vorgesehenen Nut 49 radial gleitbeweglich geführt. Sie weisen im besonderen eine längliche, klammerartige Gestalt auf und erstrecken sich in der in Fig. 6 gezeigten Spannstellung im wesentlichen parallel zur Drehachse 43 der Werkzeugaufnahme 22. Die Kopfabschnitte der Spannelemente 40 bilden die Spannkörper 38, die jeweils an dem dem Werkzeug 20 zugewandten Ende der Spannelemente 40 vorgesehen sind. Die Spannelemente 40 stützen sich jeweils an ihrem der Werkzeugaufnahme 22 zugewandten Ende am Trägerkörper 42 ab und stehen darüber hinaus jeweils über einen Halteabschnitt 46 gelenkig in Eingriff mit einer Fixierschulter 47 einer hinterschnittenen Ausnehmung 33 im Anschluß an die axiale Ausnehmung 31 des Aufnahmeabschnitts 32. Die Spannelemente 40 haben somit die Funktion einer Klammer, die in der in Fig. 6 und 7 gezeigten Spannstellung des Spannsystems das Werkzeug 20 an die Werkzeugaufnahme 22 klammert.

Die Betätigungseinrichtung 44 weist gemäß der Darstellung in Fig. 1 und 5 eine Gewindespindel 50 sowie zwei symmetrische Spannmuttern 52 auf. Die Gewindespindel 50 ist in zwei gegensinnige Gewindebereiche unterteilt, auf denen jeweils eine der Spannmuttern 52 sitzt. Die Spannkörper 38 weisen auf der dem Werkzeug 22 zugewandten Seite jeweils eine kalottenförmig ausgestaltete konkave Aussparung 53 auf, die sich zum Werkzeug 20 hin gabelförmig öffnet. Die Spannmuttern 52 weisen in Anpassung an die Aussparungen 53 jeweils einen in Bezug auf die Drehachse 43 radial außenliegenden kalottenförmig ausgestalteten konvexen Abschnitt 54 auf, der, wie es aus Fig. 1 und 5 ersichtlich ist, in der entsprechenden Aussparung 51 formschlüssig aufgenommen ist, sowie im Anschluß an den Abschnitt 54 einen in Bezug auf die Drehachse 43 radial innenliegenden Abschnitt 55. Wie es aus Fig. 1 und 5 ersichtlich ist, definieren die Abschnitte 54 und 55 eine Einschnürung 56, über die die jeweilige Spannmutter 52 derart formschlüssig mit dem jeweiligen Spannkörper 38 gehalten wird, daß zwar die bei einer Schwenkbewegung der Spannelemente 40 erforderliche geringfügige Relativdrehung der Spannmuttern 52 gegenüber der Spannkörpern 38 möglich ist, die Spannmuttern 52 jedoch bezüglich der Drehachse 70 der Gewindespindel 50 im wesentlichen drehfest angeordnet sind. Da beide Spannmuttern 52 somit in der Art und Weise einer Kugel-Pfannen-Lagerung bzw. eines Kugelgelenks relativ zu den Spannkörpern 38 drehbar gelagert sind, bietet diese Ausgestaltung der Betätigungseinrichtung 44 den Vorteil, daß die Drehachse der Gewindespindel 50 im wesentlichen immer radial zur Drehachse 43 orientiert ist.

Aufgrund der formschlüssigen Verbindung zwischen den Spannmuttern 52 mit dem jeweiligen Spannkörper 38 bewirkt eine Drehbetätigung der Gewindespindel 50 eine Schwenkbewegung der Spannelemente 40 um eine nicht dargestellte, senkrecht zur Achse 43 der Werkzeugaufnahme 22 stehende Drehachse, wobei die Spannelemente 40 eine Schwenkbewegung um die Fixierschulter 47 der hinterschnittenen Ausnehmung 33 ausführen, während sie sich zugleich an ihrem der Werkzeugaufnahme 22 zugewandten Ende am Trägerkörper 42 abstützen. Die Drehbetätigung der Gewindespindel 50 erfolgt beispielsweise durch ein im wesentlichen senkrecht zur Längs- bzw. Drehachse 43 der Werkzeugaufnahme 22 radial von außen eingeführtes Werkzeug das durch einen radialen Durchbruch 64 im Aufnahmeabschnitt 32 der Werkzeugaufnahme 22 einerseits und durch einen radialen Durchbruch 66 im Hohlschaft 28 des Werkzeugs 20 eingeführt wird. Wie es aus Fig. 1 und 5 ersichtlich, fluchtet die Drehachse 70 der Gewindespindel 50 im wesentlichen mit den Achsen der radialen Durchbrüche 64, 66, die vorzugsweise als Bohrungen ausgeführt sind. Eine rechtsdrehende Betätigung der Spannschraube 42 führt im allgemeinen zu einer synchronen Auseinanderbewegung der Spannkörper 38 und damit zu einer Klammerung des Werkzeugs 20 an die Werkzeugaufnahme 22. Ausgehend von der in den Figuren 1 und 5 dargestellten Lösestellung nehmen die Spannkörper 38 und damit die Spannelemente 40 dabei allmählich die in Fig. 6 und 7 dargestellte Spannstellung ein. In Fig. 7 sind die vier Spannpunkte A, B, C, D in der Spannstellung des erfindungsgemäßen Spannsystems mittels gestrichelter Kreise angedeutet. Eine linksdrehende Betätigung der Spannschraube 42 führt dementsprechend zu einer synchronen Annäherungsbewegung der Spannkörper 38 und damit zu einem Lösen der Keilflächenverbindung zwischen den Keilflächen 34, 36 und damit der Verbindung des Werkzeugs 20 und der Werkzeugaufnahme 22. Die Darstellung in Fig. 5 läßt erkennen, daß die Spannkörper 38 durch die linksdrehende Betätigung der Spannschraube 42 maximal soweit zusammengeklemmt werden können, bis die beiden Spannmuttern 52 aneinanderstoßen.

In der in Fig. 6 gezeigten Spannstellung stützen sich die Spannkörper 38 über die Keilflächen 36 an der Keilfläche der Spannschulter 34 ab. Der Keilflächenkontakt 34, 36 bewirkt dabei, daß der Hohlschaft 28 des Werkzeugs 20 tendenziell aufgeweitet wird, wodurch der Passungskonktakt zwischen dem Hohlschaft 28 und der Ausnehmung 31 noch inniger wird. In diesem Spannnungszustand liegt eine reib- und kraftschlüssige Verbindung zwischen den Passungsflächen des Hohlschafts 28 und der Ausnehmung 30 vor.

Wie es aus Fig. 1 ersichtlich ist, weist der Trägerkörper 42 auf seiner dem Werkzeug 20 zugewandten Seite ferner eine axiale Aufnahmeausnehmung 81 zur Aufnahme des Abdrückkörpers 80 auf. Der Abdrückkörper 80 umfaßt in einer axialen Verlängerung einen Kolben 82, der sich, wie es in Fig. 1 zu sehen ist, in einer an die Aufnahmeausnehmung 81 anschließenden axialen Ausnehmung 84 zu den Spannkörpern 38 hin erstreckt und in dieser Ausnehmung 84 mittels eines Dichtrings 86 abgedichtet aufgenommen ist. Der Abdrückkolben 82 weist einen zentrischen Vorsprung mit einer Konusfläche 82a an der den Spannkörpern 38 zugewandten Seite auf. Beim Lösen des Eingriffs der Keilflächen 36 der Spannkörper 38 mit der an der hinterschnittenen Spannschulter 34 vorgesehenen Keilfläche infolge einer entsprechenden Drehbetätigung der Gewindespindel 50 bewegen sich die Spannkörper 38 radial nach innen aufeinander zu, wobei der Funktionskontakt zwischen den Keilflächen 36 und der Spannschulter 34 allmählich aufgehoben wird. Gleichzeitig laufen die Spannkörper 38 synchron auf die Konusfläche des Abdrückkoibens 82 auf. Durch ein Weiterdrehen der Gewindespindel 50 wird die von der Gewindespindel 50 auf die Spannkörper 38 aufgebrachte, radial wirkende Kraft in eine auf den Abdrückkolben 82 wirkende, axial gerichtete Kraft umgewandelt, wodurch der Abdrückkörper 80 mit zunehmender Kraft gegen eine entsprechende Stützfläche des Werkzeugs 22 gedrückt wird, so daß eine zentrisch wirkende, positive Kraft auf das Werkzeug 22 aufgebracht wird. Die Spannkörper 38 werden damit synchron zum Bestandteil eines Keilgetriebes, mit dem der Hohlschaft 28 aus dem Aufnahmeabschnitt 32 herausgedrückt werden kann. Dies führt zu einer Trennung der durch den Eingriff der Keilflächen 36 der Spannkörper 38 mit der hinterschnittenen Spannschulter 34 geschaffenen Verbindung zwischen Werkzeug und Werkzeugaufnahme. Da der Abdrückkolben zentral angeordnet ist, lassen sich sehr einfach symmetrische Kraftverhältnisse für den Abdrückvorgang realisieren, so daß selbst bei innigster Haftung zwischen konisch ausgebildeten Zentrierflächen auf der Außenfläche des Hohlschafts einerseits und auf Seiten der Ausnehmung 30 des Aufnahmeabschnitts 32 andererseits eine zuverlässige Trennung der beiden Teile 20, 22 bewirkt werden kann.

In den Trägerkörper 42 ist zudem ein Kühl- und Schmiermittelzufuhrsystem 90 integriert, wie es sich aus Fig. 2 ergibt, über das dem an die Werkzeugaufnahme 22 montierten Werkzeug 20 Kühl und/oder Schmiermittel zugeführt werden kann.

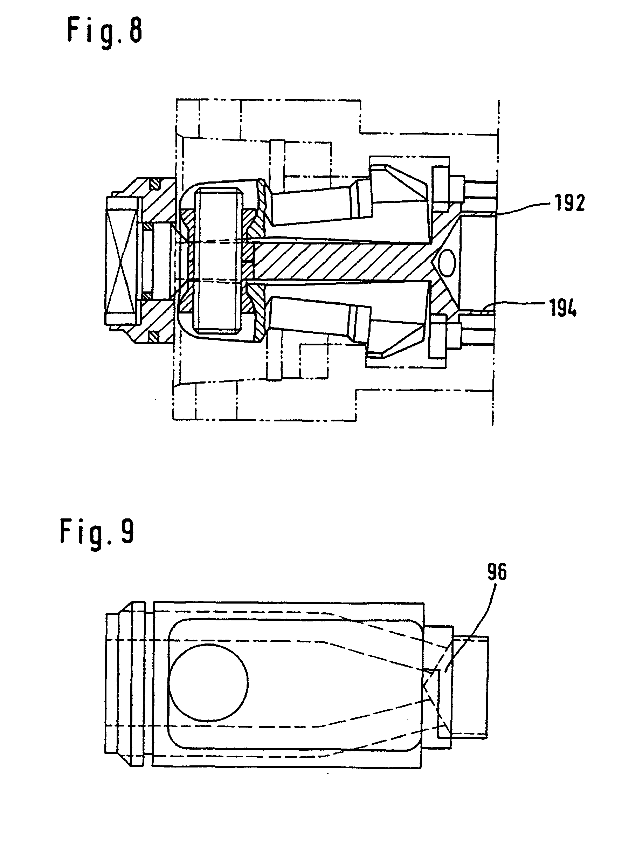

In den Figuren 8 und 9 ist das erfindungsgemäße Spannsystem gemäß einem zweiten Ausführungsbeispiel dargestellt. Dieses zweite Ausführungsbeispiel unterscheidet sich vom ersten Ausführungsbeispiel lediglich in der konstruktiven Ausgestaltung des am Trägerkörper 42 vorgesehenen axialen Zapfens 192, der gemäß Fig. 8 und 9 als ein dünnwandiger Körper ausgestaltet ist, der über eine enge Spielpassung und einer damit einhergehenden geringfügigen elastischen Verformung in der axialen Ausnehmung 194 des Aufnahmeabschnitts 32 aufgenommen ist. Diese Ausgestaltung verschafft gegenüber der massiven Ausgestaltung des Zapfens den Vorteil einer lagegenaueren Positionierung des Trägerkörpers 42 im Aufnahmeabschnitt 32.

## Patentansprüche

1. Spannsystem zur lösbaren Verbindung zweier vorzugsweise rotationssymmetrischer Teile (20; 22), von denen ein Teil (20) einen vorzugsweise zylindrischen oder konischen Hohlschaft (28) und das andere Teil (22) einen entsprechenden Aufnahmeabschnitt (32) zur passungsgenauen Aufnahme des Hohlschafts (28) aufweist, mit einer konzentrisch im Aufnahmeabschnitt (32) angeordneten Spanneinrichtung (39), die sich im aneinandergefügten Zustand der beiden Teile in den Hohlschaft (28) des einen Teils (20) erstreckt und zumindest zwei gegensinnig bewegbare Spannkörper (38) sowie eine die Spannkörper (38) antreibende Betätigungseinrichtung (44) aufweist, durch welche die Spannkörper (38) synchron in und außer Eingriff mit einer hinterschnittenen Spannschulter (34) des Hohlschafts (28) bewegbar sind, wodurch zwischen Planflächen (24; 26) der beiden zu verbindenden Teile (20; 22) eine Anpreßkraft erzeugt wird, wobei die Spannkörper (38) als Kopfabschnitte von im wesentlichen parallel zur Längs- bzw. Drehachse (43) des Aufnahmeabschnitts (32) angeordneten, länglichen Spannelementen (40) ausgeführt sind, die sich über Halteabschnitte (46) an einer hinterschnittenen Ausnehmung (33) des Aufnahmeabschnitts (32) gelenkig abstützen,
**dadurch gekennzeichnet, daß**
die Spannelemente (40) radial gleitbeweglich in Führungsnuten (49) an einem Trägerkörper (42) geführt sind, der auf seiner einen, dem Aufnahmeabschnitt (32) zugewandten Seite in diesem axial und radial fest verankerbar ist und auf seiner anderen, dem Hohlschaft (28) zugewandten Seite einen radialen Durchbruch (45) zur Aufnahme der die Spannkörper (38) antreibenden Betätigungseinrichtung (44) aufweist.

2. Spannsystem nach Anspruch 1, **dadurch gekennzeichnet, daß** sich die Spannelemente (40) an ihren Fußabschnitten am Trägerkörper (42) abstützen.

3. Spannsystem nach Anspruch 1 oder 2, **dadurch gekennzeichnet, daß** der Trägerkörper (42) auf seiner dem Hohlschaft (28) zugewandten Seite eine Aufnahmeausnehmung (81, 84) zur Aufnahme eines Abdrückkörpers (80) aufweist, der von den Spannkörpern (38) beim Lösen des Eingriffs mit der hinterschnittenen Spannschulter (34) axial bewegbar ist.

4. Spannsystem nach Anspruch 3, **dadurch gekennzeichnet, daß** die Aufnahmeausnehmung (81, 84) im Trägerkörper (42) zentrisch ausgebildet ist.

5. Spannsystem nach Anspruch 4, **dadurch gekennzeichnet, daß** der Abdrückkörper (80) eine in der Aufnahmeausnehmung (81, 84) gleitbeweglich geführte axiale Verlängerung (82) umfaßt, die eine zur Bewegungsachse geneigte Flächenanordnung bzw. Konusfläche (82a) aufweist, auf die die Spannkörper (38) beim Lösen des Eingriffs mit der hinterschnittenen Spannschulter (34) des Hohlschafts (28) vorzugsweise flächig auflaufen.

6. Spannsystem nach einem der Ansprüche 3 bis 5, **dadurch gekennzeichnet, daß** die axiale Verlängerung (82) des Abdrückkörpers (80) in der Aufnahmeausnehmung (81, 84) des Trägerkörpers (42) abgedichtet aufgenommen ist.

7. Spannsystem nach einem der Ansprüche 1 bis 6, **gekennzeichnet durch** ein im Trägerkörper (42) ausgebildetes Kühl- und Schmiermittelzufuhrsystem (90) zum Transport von Kühl- und/oder Schmiermittel von dem den Aufnahmeabschnitt (32) tragenden Teil (22) zu dem den Hohlschaft (28) tragenden Teil (20).

8. Spannsystem nach einem der Ansprüche 1 bis 7, **dadurch gekennzeichnet, daß** der Trägerkörper (42) auf seiner dem Aufnahmeabschnitt (32) zugewandten Seite einen sich axial erstreckenden Zapfen (92) aufweist, der in einer entsprechenden axialen Zapfenausnehmung (94) in dem den Aufnahmeabschnitt (32) tragenden Teil (22) abgedichtet aufgenommen ist.

9. Spannsystem nach Anspruch 8, **dadurch gekennzeichnet, daß** der Zapfen (92) massiv ausgebildet und über eine Spielpassung in der axialen Zapfenausnehmung (94) aufgenommen ist.

10. Spannsystem nach Anspruch 8, **dadurch gekennzeichnet, daß** der Zapfen (192) dünnwandig ausgebildet und über eine Preßpassung in der axialen Zapfenausnehmung (194) aufgenommen ist.

11. Spannsystem nach einem der Ansprüche 1 bis 10, **dadurch gekennzeichnet, daß** der Trägerkörper (42) über eine Bajonettverankerung (96) im Aufnahmeabschnitt (32) verankerbar ist.

12. Spannsystem nach einem der Ansprüche 1 bis 11, **dadurch gekennzeichnet, daß** die Spannkörper (38) jeweils mit einer Keilflächenanordnung (36) versehen sind, die mit einer an der hinterschnittenen Spannschulter (34) des Hohlschafts (28) vorgesehenen Gegenfläche (34a) zusammenwirkt, vorzugsweise derart, daß vier über den Umfang im wesentlichen gleichmäßig verteilte Spannbereiche (A, B, C, D) ausgebildet werden.

13. Spannsystem nach Anspruch 12, **dadurch gekennzeichnet, daß** die hinterschnittene Spannschulter (34) Teil einer im Hohlschaft (28) ausgebildeten Ausnehmung mit einem geschlossenen Ringquerschnitt ist.

14. Spannsystem nach einem der Ansprüche 1 bis 13, **dadurch gekennzeichnet, daß** die zu verbindenden Teile (20; 22) als rotationssymmetrische Teile und die Anpreßflächen der zu verbindenden Teile als Radialringflächen (24; 26) ausgeführt sind.

15. Spannsystem nach einem der Ansprüche 1 bis 14, **dadurch gekennzeichnet, daß** die Passungsflächen zwischen Hohlschaft (28) und Aufnahmeabschnitt (32) von Konusflächen gebildet sind.

16. Spannsystem nach einem der Ansprüche 1 bis 15, **dadurch gekennzeichnet, daß** der Aufnahmeabschnitt (32) und der Hohlschaft (28) jeweils einen mit dem radialen Durchbruch (45) im Trägerkörper (42) fluchtenden radialen Durchbruch (64, 66) aufweisen, über die von außen ein Werkzeug zum Antrieb der Betätigungseinrichtung (44) einführbar ist.

17. Spannsystem nach Anspruch 16, **dadurch gekennzeichnet, daß** die Betätigungseinrichtung (44) eine über das Werkzeug betätigbare Gewindespindel (50) mit gegensinnigen Gewindeabschnitten sowie zwei entsprechende, symmetrische Spannmuttern (52) umfaßt, die auf jeweils einem der Gewindeabschnitten sitzen.

18. Spannsystem nach Anspruch 17, **dadurch gekennzeichnet, daß** die Spannmuttern (52) jeweils kalottenförmig ausgestaltet und in einer entsprechenden kalottenförmigen Aussparung (53) im jeweiligen Spannkörper (38) gelagert sind.

## Claims

1. A chucking system for detachable connection of two parts (20; 22), which preferably are rotationally symmetric, of which one part (20) has a preferably cylindrical or conical hollow shank (28) and the other part (22) has a corresponding receiving portion (32) for receiving the hollow shank (28) in a precisely fitting relationship, with a chucking means (39), disposed concentrically in the receiving portion (32), which extends into the hollow shank (28) of the one part (20) when the two parts are in abutting condition, and is provided with at least two chucking members (38) that can move in opposite directions as well as an actuating means (44) that drives the chucking members (38), by which actuating means the chucking members (38) can be moved synchronously into and out of engagement with an undercut chucking shoulder (34) of the hollow shank (28), whereby a contact pressure is produced between plane faces (24; 26) of the two parts (20; 22) to be connected, the chucking members (38) being designed as head portions of elongated chucking elements (40), which are disposed substantially parallel to the longitudinal axis or axis (43) of rotation of the receiving portion (32) and which are braced in articulated relationship via retaining portions (46) against an undercut recess (33) of the receiving portion (32), **characterized in that**
the chucking elements (40) are guided to move slidingly in radial direction in guide slots 49 in a carrier member (42), which can be firmly anchored axially and radially therein on its end turned toward the receiving portion (32) and which is provided at its other end turned toward the hollow shank (28) with a radial opening (45) for receiving the actuating means (44) for driving the chucking members (38).

2. A chucking system according to claim 1, **characterized in that** the chucking elements (40) are braced at their foot portions against the carrier member (42).

3. A chucking system according to claim 1 or 2, **characterized in that** the carrier member (42) is provided on its end facing the hollow shank (28) with a receiving recess (81, 84) for receiving an ejector member (80), which can be moved axially by the chucking members (38) during loosening of the engagement with the undercut chucking shoulder (34).

4. A chucking system according to claim 3, **characterized in that** the receiving recess (81, 84) is formed centrally in the carrier member (42).

5. A chucking system according to claim 4, **characterized in that** the ejector member (80) is provided with an axial extension (82) which is guided to move slidingly in the receiving recess (81, 84) and which has a face arrangement inclined relative to the axis of movement or a conical face (82a), on which the chucking members (38) can travel, preferably through surface contact, during loosening of the engagement with the undercut chucking shoulder (34) of the hollow shank (28).

6. A chucking system according to one of claims 3 to 5, **characterized in that** the axial extension (82) of the ejector member (80) is received sealingly in the receiving recess (81, 84) of the carrier member (42).

7. A chucking system according to one of claims 1 to 6, **characterized by** a coolant and lubricant supply system (90) formed in the carrier member (42) for transport of coolant and/or lubricant from the part (22) carrying the receiving portion (32) to the part (20) carrying the hollow shank (28).

8. A chucking system according to one of claims 1 to 7, **characterized in that** the carrier member (42) is provided on its end turned toward the receiving portion (32) with an axially extending stub (92), which is received sealingly in a corresponding axial stub recess (94) in the part (22) carrying the receiving portion (32).

9. A chucking system according to claim 8, **characterized in that** the stub (92) is of massive construction and is received via a loose fit with narrow clearance in the axial stub recess (94).

10. A chucking system according to claim 8, **characterized in that** the stub (192) is of thin-walled construction and is received via an interference fit in the axial stub recess (194).

11. A chucking system according to one of claims 1 to 10, **characterized in that** the carrier member (42) can be anchored via a quarter-turn fastener (96) in the receiving portion (32).

12. A chucking system according to one of claims 1 to 11, **characterized in that** the clamping members (38) are each provided with a wedge-face arrangement (36), which cooperates with a mating face (34a) provided on the undercut chucking shoulder (34) of the hollow shank (28), preferably in such a way that four chucking regions (A, B, C, D) distributed substantially regularly over the circumference are formed.

13. A chucking system according to claim 12, **characterized in that** the undercut chucking shoulder (34) is part of a recess with closed annular cross section formed in the hollow shank (28).

14. A chucking system according to one of claims 1 to 13, **characterized in that** the parts (20; 22) to be connected are constructed as rotationally symmetric parts and the pressure-bearing faces of the parts to be connected are constructed as radial annular faces (24; 26).

15. A chucking system according to one of claims 1 to 14, **characterized in that** the close-fitting faces between the hollow shank (28) and the receiving portion (32) are formed by conical faces.

16. A chucking system according to one of claims 1 to 15, **characterized in that** the receiving portion (32) and the hollow shank (28) each have a radial opening (64, 66), which is aligned with the radial opening (45) in the carrier body (42) and via which a tool for driving the actuating means (44) can be introduced from outside.

17. A chucking system according to claim 16, **characterized in that** the actuating means (44) is provided with a threaded spindle (50) that can be actuated via the tool and that has two oppositely threaded portions as well as two corresponding, symmetric chucking nuts (52), which are seated respectively on one of the threaded portions.

18. A chucking system according to claim 17, **characterized in that** the chucking nuts (52) are each cup-shaped and are supported in a corresponding cup-shaped cavity (53) in the respective chucking member (38).

## Revendications

1. Système tendeur pour le raccordement amovible de deux parties (20 ; 22) de préférence à symétrie de révolution, desquelles une partie (20) présente une tige creuse (28) de préférence cylindrique ou conique et l'autre partie (22) une section de logement (32) correspondante pour le logement précis de la tige creuse (28), comprenant un dispositif tendeur (39) disposé de manière concentrique dans la section de logement (32), lequel dispositif s'étend dans l'état assemblé des deux parties dans la tige creuse (28) d'une des deux parties (20), et présente au moins deux corps tendeurs (38) se déplaçant en sens inverse ainsi qu'un dispositif de commande (44) actionnant les corps tendeurs (38), par lequel dispositif les corps tendeurs (38) se déplacent de manière synchrone en prise et hors de la prise avec un épaulement tendeur (34) contre-dépouillé de la tige creuse (28), moyennant quoi une force de pression est produite entre les surfaces transversales (24 ; 26) des deux parties (20 ; 22) destinées à être raccordées, moyennant quoi les corps tendeurs (38) sont réalisés comme sections de tête d'éléments tendeurs (40) longitudinaux, disposés sensiblement parallèlement à l'axe longitudinal ou de rotation (43) de la section de logement (32), lesquels éléments s'appuient de manière articulée par l'intermédiaire de sections de retenue (46) sur un évidement (33) contre-dépouillé de la section de logement (32), **caractérisé en ce que** les éléments tendeurs (40) sont guidés radialement dans un déplacement de glissement dans des glissières (49) sur un corps de support (42), qui, sur son côté tourné vers la section de logement (32), peut être fixé fermement, axialement et radialement dans celle-ci, et qui comprend sur son autre côté tourné vers la tige creuse (28) une ouverture (45) radiale pour loger le dispositif de commande (44) actionnant les corps tendeurs (38).

2. Système tendeur selon la revendication 1, **caractérisé en ce que** les éléments tendeurs (40) s'appuient sur le corps de support (42) au niveau de leurs sections de pied.

3. Système tendeur selon la revendication 1 ou 2, **caractérisé en ce que** le corps de support (42) présente sur son côté tourné vers la tige creuse (28) un évidement de logement (81, 84) pour loger un corps de pression (80), qui peut se déplacer axialement depuis les corps tendeurs (38) lors du détachement de la prise avec l'épaulement tendeur (34) contre-dépouillé.

4. Système tendeur selon la revendication 3, **caractérisé en ce que** l'évidement de logement (81, 84) est conçu au centre du corps de support (42).

5. Système tendeur selon la revendication 4, **caractérisé en ce que** le corps de pression (80) comprend un prolongement (82) axial guidé dans un déplacement de glissement dans l'évidement de logement (81, 84), lequel prolongement présente une surface conique ou un agencement de surfaces (82a) incliné(e) par rapport à l'axe de déplacement, sur lequel(laquelle) les corps tendeurs (38) sont disposés de préférence de manière plane, lors du détachement de la prise avec l'épaulement (34) contre-dépouillé de la tige creuse (28).

6. Système tendeur selon l'une quelconque des revendications 3 à 5, **caractérisé en ce que** le prolongement axial (82) du corps de pression (80) est logé de manière étanche dans l'évidement de logement (81, 82) du corps de support (42).

7. Système tendeur selon l'une quelconque des revendications 1 à 6, **caractérisé par** un système d'amenage de produits réfrigérants et de lubrifiants (90), conçu dans le corps de support (42), pour le transport de produits réfrigérants et/ou de lubrifiants depuis la partie (22) supportant la section de logement (32) jusqu'à la partie (20) supportant la tige creuse (28).

8. Système tendeur selon l'une quelconque des revendications 1 à 7, **caractérisé en ce que** le corps de support (42) présente sur son côté tourné vers la section de logement (32) une cheville (92) s'étendant axialement, qui est logée dans un évidement de cheville (94) axial correspondant dans la partie (22) supportant la section de logement (32).

9. Système tendeur selon la revendication 8, **caractérisé en ce que** la cheville (92) est conçue de manière solide et est logée par l'intermédiaire d'un ajustement avec jeu dans l'évidement de cheville (94) axial.

10. Système tendeur selon la revendication 8, **caractérisé en ce que** la cheville (192) est conçue à paroi mince et est logée par l'intermédiaire d'un ajustement sans jeu dans l'évidement de cheville (194) axial.

11. Système tendeur selon l'une quelconque des revendications 1 à 10, **caractérisé en ce que** le corps de support (42) peut être fixé dans la section de logement (32) par l'intermédiaire d'une fixation à baïonnette (96).

12. Système tendeur selon l'une quelconque des revendications 1 à 11, **caractérisé en ce que** les corps tendeurs (38) sont dotés respectivement d'un agencement de surfaces cunéiformes (36), qui coopère avec une surface antagoniste (34a) prévue sur l'épaulement tendeur (34) contre-dépouillé de la tige creuse (28), de préférence de telle sorte que soient conçues quatre zones tendeuses (A, B, C, D) réparties sensiblement uniformément sur toute la périphérie.

13. Système tendeur selon la revendication 12, **caractérisé en ce que** l'épaulement tendeur (34) contre-dépouille fait partie d'un évidement conçu dans la tige creuse (28) comprenant une section transversale annulaire fermée.

14. Système tendeur selon l'une quelconque des revendications 1 à 13, **caractérisé en ce que** les parties (20 ; 22) destinées à être raccordées sont réalisées comme des parties à symétrie de révolution, et les surfaces de pression des parties destinées à être raccordées comme des surfaces annulaires (24 ; 26).

15. Système tendeur selon l'une quelconque des revendications 1 à 14, **caractérisé en ce que** les surfaces d'ajustement situées entre la tige creuse (28) et la section de logement (32) sont formées par des surfaces coniques.

16. Système tendeur selon l'une quelconque des revendications 1 à 15, **caractérisé en ce que** la section de logement (32) et la tige creuse (28) présentent respectivement une ouverture (64, 66) radiale s'alignant avec l'ouverture (45) radiale dans le corps de support (42), par l'intermédiaire de laquelle un outil peut être introduit depuis l'extérieur pour actionner le dispositif de commande (44).

17. Système tendeur selon la revendication 16, **caractérisé en ce que** le dispositif de commande (44) comprend une broche filetée (50) pouvant être actionnée par l'intermédiaire de l'outil, avec des sections de filet en sens inverse, ainsi que deux écrous tendeurs (52) correspondants et symétriques, qui reposent sur respectivement une des sections de filet.

18. Système tendeur selon la revendication 17, **caractérisé en ce que** les écrous tendeurs (52) sont conçus respectivement en forme de calotte et sont montés dans une cavité (53) correspondante en forme de calotte dans le corps tendeur (38) respectif.
